# EUROPÄISCHE PATENTSCHRIFT

(11) **EP 2 557 417 B1**
(45) Veröffentlichungstag und Bekanntmachung des Hinweises auf die Patenterteilung: **11.05.2016**
(21) Anmeldenummer: 12179718.7
(22) Anmeldetag: 08.08.2012
(51) Int. Cl.: G01N 27/28

(54) **Wechselarmatur**
Replacement fitting
Support rétractable

(30) Priorität: 08.08.2011 DE 102011080579
(43) Veröffentlichungstag der Anmeldung: 13.02.2013
(73) Patentinhaber: Endress + Hauser Conducta GmbH+Co. KG, 70839 Gerlingen (DE)
(72) Erfinder: Pfauch, Thomas, 04158 Leipzig (DE); Straub, Hermann, 72108 Rottenburg (DE); Kündscher, Rene, 01471 Radeburg (DE); Schlereth, Rainer, 41469 Neuss (DE)
(74) Vertreter: Andres, Angelika Maria

(56) Entgegenhaltungen:
- EP-A1- 0 882 896
- EP-A1- 1 750 121
- EP-A1- 1 752 763
- EP-A2- 2 019 312
- EP-A2- 2 251 650
- WO-A1-2004/023127
- DE-B4-102005 051 279

## Beschreibung

Die Erfindung betrifft eine Wechselarmatur.

Wechselarmaturen sind in der Analysemesstechnik weit verbreitet. Sie dienen dazu, Sonden ohne Unterbrechung laufender Prozesse selbst bei Drücken bis zu 10 bar und mehr in einen Prozess, und damit einem Medium, einzuführen und anschließend wieder aus dem Prozess zu entnehmen. Die Sonden werden mittels eines Antriebs manuell oder automatisch, beispielsweise pneumatisch, axial zwischen einer Prozessstellung und einer Servicestellung verfahren. In der Servicestellung ist die Sonde typischerweise gegen das Medium abgedichtet.

Sonden im Sinne dieser Erfindung umfassen Sonden mit zumindest einer Aufnahme für zumindest einen Sensor zur Messung einer oder mehrerer Prozessgrößen sowie Probenehmer, die aus dem Prozess eine bestimmte Menge an Medium entnehmen oder zufügen.

Der Einsatzbereich von Wechselarmaturen zur Messung physikalischer oder chemischer Prozessgrößen eines Mediums, z.B. eines Fluids, insbesondere einer Flüssigkeit, in der Prozesstechnik ist vielfältig. Für die Bestimmung der Prozessgrößen werden Sensoren verwendet, wobei es sich bei den Sensoren beispielsweise um pH-Sensoren, Leitfähigkeitssensoren, optische oder elektrochemische Sensoren zur Bestimmung einer Konzentration einer in dem zu überwachenden Medium enthaltenen Substanz, z.B. O₂, CO₂, bestimmte lonenarten, organische Verbindungen, ö.ä. handelt.

Werden Wechselarmaturen zur Aufnahme des Sensors zur Bestimmung zumindest einer Prozessgröße verwendet, kann der Sensor in der Servicestellung überprüft, kalibriert, gereinigt und/oder ausgetauscht werden, wobei sich der Sensor dabei in einer im Gehäuse der Wechselarmatur angeordneten Behandlungskammer befindet.

Werden Wechselarmaturen als Probenehmer verwendet, kann in der Servicestellung das vom Probenehmer entnommene Medium in der Behandlungskammer untersucht, weitergeleitet und/oder abgefüllt werden, oder der Probenehmer selbst wird überprüft, gereinigt und/oder ausgetauscht. Sollen ein oder mehrere Medien zum Prozess hinzugefügt werden, kann in der Servicestellung der Probenehmer mittels einer entsprechenden Vorrichtung mit Medium gefüllt werden und durch die Wechselarmatur in den Prozess gefahren werden.

Insbesondere in der Pharmatechnik, aber beispielsweise auch in der Chemie- und Lebensmittelindustrie werden Wechselarmaturen dazu verwendet, den Herstellungsprozess von Produkten zu überwachen. Die zu überwachenden Prozesse müssen sehr sauber, d.h. frei von Verunreinigungen, teilweise sogar steril, gehalten werden, da eine Kontamination der Prozessmedien mit Verunreinigungen, oder allgemein mit unerwünschten Medien, Einfluss auf das Endprodukt, und somit auch auf den Kunden oder je nach Anwendung auch auf den Patienten, hat.

Der Einsatz von Wechselarmaturen in Zusammenhang mit sterilen Prozessen ist problematisch, da Spülmedien, z.B. Kalibrierflüssigkeiten, Schmierstoffe des Antriebs oder sonstige Fremdstoffe keinesfalls in den Prozess gelangen dürfen, weil dadurch die Produktsicherheit oder die Patientensicherheit gefährdet, sowie die Kundenzufriedenheit getrübt würde.

Es ist bedenklich, dass es bei den bekannten Lösungen keine zuverlässige Trennung zwischen der Behandlungskammer und dem Antrieb gibt. Als Folge hiervon kann bei einer Undichtigkeit im Bereich der Behandlungskammer Medium unbemerkt in den Antrieb gelangen, was zu einem Ausfall des Antriebs führen kann; darüber hinaus ist es nicht ausgeschlossen, dass Medium über die Antriebseinheit in die Umgebung gelangt. Schlimmer jedoch ist, dass unsaubere , sicherlich aber unsterile Stoffe aus dem Antriebsraum oder der Umgebung in die Behandlungskammer gelangen/verschleppt werden und sich somit im sauberen , evtl. sogar sterilen, Bereich der Wechselarmatur befinden. Im ungünstigsten Fall gelangen nun die unsauberen Stoffe von der Behandlungskammer in den Prozess. Somit ist das Medium mit unerwünschten Stoffen kontaminiert und kann nicht für den Patienten oder Kunden verwendet werden. Als kritisch zu bezeichnende Merkmale des Mediums können beispielsweise verstanden werden: wertvoll, teuer, brennbar, ätzend, giftig, biogefährdend, radioaktiv etc.

Der Erfindung liegt daher die Aufgabe zugrunde, ein Dichtsystem für eine Wechselarmatur bereitzustellen, das einen Austausch von Verunreinigungen zwischen Antrieb und Behandlungskammer verhindert.

Die Aufgabe wird gelöst durch eine Wechselarmatur, umfassend
ein Gehäuse,
einen Mediumsanschluss mit komplementären Anschlussmitteln, der an dem Gehäuse angeordnet ist und die Wechselarmatur mit einem Behältnis verbindbar macht,
ein Tauchrohr, das durch einen Antrieb axial zumindest zwischen zwei, vorzugsweise drei Stellungen, verfahrbar ist, und zwar
einer aus dem Gehäuse ausgefahrenen Prozessstellung, zumindest einer Zwischenstellung, und
einer in das Gehäuse eingefahrenen Servicestellung,
eine Sonde, die im Tauchrohr vorgesehen ist,
wobei die Sonde an ihrem dem Medium zugewandten Ende einen Sondenkopf aufweist,

Eine Lösung schlägt die EP 1 752 763 A1 vor. Darin ist eine Wechselarmatur gezeigt, bei der sich eine im Tauchrohr angeordnete Sonde stets außerhalb des Antriebsgehäuses befindet.

Bei der DE 10 2005 051 279 B4 ist eine Wechselarmatur zur Messung einer Eigenschaft eines Mediums in einem Behälter gezeigt. Die dortige Wechselarmatur umfasst eine erste Kammer zur Aufnahme eines Kalibrierfluids und eine, dem Behälter zugewandte, zweite Kammer zur Aufnahme eines neutralen Fluids. Es wird vorgeschlagen einen Dichtungsschaden einer Dichtung zwischen erster Kammer und zweiter Kammer oder einer Dichtung zwischen Behälter und zweiter Kammer dadurch rechtzeitig zu erkennen, dass eine Messvorrichtung zumindest eine Eigenschaft des neutralen Fluids misst.

Die EP 2 019 312 A2 zeigt eine Wechselarmatur für hygienische Anwendungen mit einem im Unterteil der Wechselarmatur angeordneten Zwangsströmungskörper zur Erzeugung einer Zwangsströmung zur Reinigung der Kalibrierkammer.

Bauart- oder anwendungsbedingt lassen sich solche Lösungen nicht immer umsetzen.

Der Erfindung liegt daher die Aufgabe zugrunde, eine Wechselarmatur bereitzustellen, die ein reinigbares und sterilisierbares Dichtsystem umfasst.

Die Aufgabe wird gelöst durch eine Wechselarmatur, umfassend
ein Gehäuse,
einen Mediumsanschluss, der an dem Gehäuse angeordnet ist und die Wechselarmatur mit einem Behältnis verbindbar macht,
ein Tauchrohr, das durch einen Antrieb axial zumindest zwischen drei Stellungen verfahrbar ist, und zwar
einer aus dem Gehäuse ausgefahrenen Prozessstellung,
zumindest einer Zwischenstellung, und
einer in das Gehäuse eingefahrenen Servicestellung,
eine Sonde, die im Tauchrohr vorgesehen ist,
wobei die Sonde an ihrem dem Medium zugewandten Ende einen Sondenkopf aufweist,
wobei in der Servicestellung der Sondenkopf innerhalb einer im Gehäuse gebildeten Behandlungskammer angeordnet ist,
wobei das Tauchrohr in drei Bereiche geteilt ist, und zwar
einen oberen, dem Behältnis abgewandten, Bereich,
einen mittleren Bereich an dem ein Dichtsystem vorgesehen ist, und einen unteren, dem Behältnis zugewandten, Bereich,
wobei das Dichtsystem so ausgestaltet ist, dass in keiner Stellung des Tauchrohres ein Austausch von Medium oder Verunreinigungen von Antrieb zu Behandlungskammer und umgekehrt statt findet,
dadurch gekennzeichnet, dass
ein Rastelement, ein selbsthemmender Antrieb oder eine Automatik vorgesehen ist, das das Tauchrohr in Zwischenstellung arretiert.

In dem obigen und folgenden Textabschnitten seien die Positionsangaben "oben" bzw. "oberen" oder Abwandlungen dieser Begriffe als dem Behältnis abgewandt oder von diesem weiter weg positioniert zu verstehen. Entsprechend seien die Positionsangaben "unten" bzw. "unteren" oder Abwandlungen dieser Begriffe als dem Behältnis zugewandt oder diesem näher positioniert zu verstehen.

Durch die Dreiteilung des Tauchrohrs und die Verwendung eines Dichtsystems im mittleren Bereich des Tauchrohrs ist es möglich zu verhindern, dass Verunreinigungen von Antrieb zu Behandlungskammer, und im schlimmsten Fall zum Medium, sowie umkehrt, gelangen.

Dadurch, dass ein Rastelement, ein selbsthemmender Antrieb oder eine Automatik vorgesehen ist, kann gewährleistet werden, dass das Tauchrohr sicher in Zwischenstellung verweilt und z.B. eine Reinigung und Sterilisation des mittleren Abschnitts des Dichtsystems, durchgeführt werden können.

Es ist denkbar, dass die jeweiligen Bereiche des Tauchrohrs aus unterschiedlichen Materialen bestehen. Dadurch lassen sich Kosten sparen und/oder für den jeweiligen Zweck optimierte Materialien verwenden. So kann der untere, prozessberührende Bereich beispielsweise aus einem chemisch sehr widerstandsfähigem Material hergestellt sein.

In einer Ausgestaltung ist es als besonders vorteilhaft anzusehen, dass das Dichtsystem in drei Abschnitte geteilt ist, und zwar einen oberen Abschnitt,
einen mittleren Abschnitt und einen unteren Abschnitt.

In einer bevorzugten Ausführungsform besteht dabei das Dichtsystem aus zwei Dichtungen, wobei am oberen Abschnitt des Dichtsystems die erste Dichtung vorgesehen ist, wobei am unteren Abschnitt des Dichtsystems die zweite Dichtung vorgesehen ist, und der mittlere Abschnitt des Dichtsystems die Länge L hat. Beide Dichtungen befinden sich bevorzugterweise auf der Außenseite des Tauchrohres.

In einer alternativen Ausführung besteht das Dichtsystem aus einer Dichtung mindestens der Länge L, wobei die obere Kante der Dichtung dem oberen Abschnitt des Dichtsystems zugeordnet ist, wobei die untere Kante der Dichtung dem unteren Abschnitt des Dichtsystems zugeordnet ist, und wobei der Bereich zwischen der oberen und der unteren Kante der Dichtung dem mittleren Abschnitt des Dichtsystems zugeordnet ist. Die Dichtung befindet sich bevorzugterweise auf der Außenseite des Tauchrohres.

Durch die Verwendung zweier Dichtungen bei einer Dreiteilung des Dichtsystems mit einer Länge L des mittleren Abschnitts bzw. einer einzigen Dichtung der Länge L ist es Anschlusses, und damit dem Antrieb zugewandt, befindet. Dies ist potentiell ein keimbehafteter Bereich.

In einer vorteilhaften Ausführungsform ist eine Leckagebohrung durch das Gehäuse vorgesehen, wobei eine Detektionseinheit der Leckagebohrung zugeordnet ist, wobei die Leckagebohrung so angeordnet ist, dass die Detektionseinheit einen Defekt des oberen Abschnitts des Dichtsystems detektiert, wenn sich das Tauchrohr in Servicestellung befindet und Spülmedium durch den ersten Anschluss strömt oder der erste Anschluss mit Druck beaufschlagt wird.

Mit der erfindungsgemäßen Wechselarmatur wird durch das vorgeschlagene Dichtsystem verhindert, dass Verunreinigungen vom Antrieb zur Behandlungskammer gelangen. Problematisch ist, wenn aufgrund von Materialermüdung etc. das Dichtsystem nicht mehr einwandfrei funktioniert. Es ist deswegen als besonders vorteilhaft anzusehen, dass ein etwaiger Defekt des oberen Abschnitts des Dichtsystems detektiert werden kann und entsprechende Gegenmaßnahmen ergriffen werden können.

In einer erstrebsamen Weiterbildung ist ein zweiter Anschluss am Gehäuse zur Behandlungskammer vorgesehen, der derart angeordnet ist, dass das bei axialer Bewegung des Tauchrohres von Servicestellung in Prozessstellung verdrängte Medium durch den Anschluss entweicht. Der zweite Anschluss ist üblicherweise axial unterhalb des ersten Anschlusses, d.h. dem Prozess zugewandter, positioniert. Das verdrängte Medium kann dabei sowohl flüssig als auch gasförmig sein, z.B. Luft. Somit ist gewährleistet, dass sich das Tauchrohr von Service- in Prozessstellung bewegen kann. Befindet sich das Tauchrohr in Servicestellung kann durch den zweiten Anschluss Spülmedium, das durch den ersten Anschluss in die Behandlungskammer eingebracht wurde, wieder abfließen.

Befindet sich das Tauchrohr in Zwischenstellung spült, reinigt und/oder sterilisiert durch den zweiten Anschluss einfließendes Spülmedium in einer Ausgestaltung die Behandlungskammer. Das Dichtsystem dichtet zum oberen Anschluss und das Spülmedium fließt über den Mediumsanschluss ab. Zusätzlich kann der obere Anschluss, z.B. über ein Ventil, geschlossen sein. Somit kann eine Dichtung, die in Servicestellung die Behandlungskammer zu Prozess dichtet, gespült, gereinigt und/oder sterilisiert werden. Üblicherweise ist dabei der Prozess unterbrochen.

Bereits erwähnt wurde, dass durch den ersten Anschluss einströmendes Spülmedium den unteren Abschnitt des Dichtsystems spült, reinigt und/oder sterilisiert, wenn sich das Tauchrohr in Servicestellung befindet. In einer Ausgestaltung wird ein zweistufiges Spülen angewendet: zuerst wird durch den zweiten Anschluss gespült um grobe Verunreinigungen zu lösen. Anschließend wird durch den ersten Anschluss gespült.

In einer bevorzugten Ausführung ist eine Detektionseinheit dem zweiten Anschluss zugeordnet, die einen Defekt des unteren Abschnitts des Dichtsystems detektiert, wenn sich das Tauchrohr in Zwischenstellung befindet und Spülmedium durch den ersten Anschluss strömt oder der erste Anschluss mit Druck beaufschlagt wird.

Somit ist auch gewährleistet, dass ein Defekt des unteren Abschnitts des Dichtsystems detektiert wird, was als besonders vorteilhaft anzusehen ist. Etwaige Defekte des mittleren Abschnitts des Dichtsystems wirken sich unmittelbar entweder auf den oberen oder den unteren Abschnitt aus und können ebenso detektiert werden. Somit ist eine generelle Detektion eines Defekts der Dichteinrichtung möglich. Selbstredend ist dabei der Anschluss zum Prozess gedichtet, d.h. das einströmende Spülmedium fließt nicht durch den Mediumsanschluss in Richtung Prozess. Durch einen schrägen Einbau, d.h. circa 15° bis 75° zur Waagerechten, kann ein Abfluss des Spülmediums durch den zweiten Anschluss erleichtert bzw. erzwungen werden.

Um das Tauchrohr in Zwischenstellung zu arretieren ist ein Rastelement, ein selbsthemmender Antrieb oder eine Automatik vorgesehen.

Somit kann gewährleistet werden, dass das Tauchrohr sicher in Zwischenstellung verweilt und die beschriebenen Schritte, wie z.B. Reinigung und Sterilisation des mittleren Abschnitts des Dichtsystems, durchgeführt werden können.

In einer vorteilhaften Weiterbildung ist eine Spülkammer vorgesehen, die im Gehäuse unterhalb der Behandlungskammer angeordnet ist.

Zusammen mit der Behandlungskammer stehen nun zwei verschiedene Kammern zur Verfügung um Arbeiten an der Sonde durchzuführen. Ein Beispiel hierfür ist die Sterilisation oder Kalibration der Sonde in der Behandlungskammer.

In einer bevorzugten Ausführungsform ist mindestens ein Anschluss am Gehäuse zur Spülkammer vorgesehen, der so ausgestaltet ist, dass durch den Anschluss strömendes Spülmedium die Spülkammer spült, reinigt und/oder sterilisiert.

In die Spülkammer wird beispielsweise ein Spülmedium eingeleitet, das sich gegenüber dem in dem Behältnis befindlichen Medium sowie gegenüber dem in der Behandlungskammer befindlichen Spülmedium oder Kalibriermedium unkritisch verhält, d. h. es ist biologisch und/oder Anschluss, z.B. über ein Ventil, geschlossen sein. Somit kann eine Dichtung, die in Servicestellung die Behandlungskammer zu Prozess dichtet, gespült, gereinigt und/oder sterilisiert werden. Üblicherweise ist dabei der Prozess unterbrochen.

Bereits erwähnt wurde, dass durch den ersten Anschluss einströmendes Spülmedium den unteren Abschnitt des Dichtsystems spült, reinigt und/oder sterilisiert, wenn sich das Tauchrohr in Servicestellung befindet. In einer Ausgestaltung wird ein zweistufiges Spülen angewendet: zuerst wird durch den zweiten Anschluss gespült um grobe Verunreinigungen zu lösen. Anschließend wird durch den ersten Anschluss gespült.

In einer bevorzugten Ausführung ist eine Detektionseinheit dem zweiten Anschluss zugeordnet, die einen Defekt des unteren Abschnitts des Dichtsystems detektiert, wenn sich das Tauchrohr in Zwischenstellung befindet und Spülmedium durch den ersten Anschluss strömt oder der erste Anschluss mit Druck beaufschlagt wird.

Somit ist auch gewährleistet, dass ein Defekt des unteren Abschnitts des Dichtsystems detektiert wird, was als besonders vorteilhaft anzusehen ist. Etwaige Defekte des mittleren Abschnitts des Dichtsystems wirken sich unmittelbar entweder auf den oberen oder den unteren Abschnitt aus und können ebenso detektiert werden. Somit ist eine generelle Detektion eines Defekts der Dichteinrichtung möglich. Selbstredend ist dabei der Anschluss zum Prozess gedichtet, d.h. das einströmende Spülmedium fließt nicht durch den Mediumsanschluss in Richtung Prozess. Durch einen schrägen Einbau, d.h. circa 15° bis 75° zur Waagerechten, kann ein Abfluss des Spülmediums durch den zweiten Anschluss erleichtert bzw. erzwungen werden.

Zusammengefasst kann gesagt werden, dass alle sicherheitskritischen Dichtungen der erfindungsgemäßen Wechselarmaturen auf einen möglichen Defekt überwacht werden und so rechzeitig entsprechende Gegenmaßnahmen ergriffen werden können

Die Erfindung wird anhand der nachfolgenden Figuren näher erläutert. Es zeigt
Fig. 1a einen Querschnitt durch eine erfindungsgemäße Wechselarmatur in Servicestellung,
Fig. 1b eine Detailansicht des Dichtsystems aus Fig. 1a,
Fig. 1c einen Querschnitt durch eine erfindungsgemäße Wechselarmatur in Servicestellung in einer Ausgestaltung,
Fig. 2 einen Querschnitt durch die Wechselarmatur in Zwischenstellung,
Fig. 3 einen Querschnitt durch die Wechselarmatur in Prozessstellung,
Fig. 4a einen Querschnitt durch die Wechselarmatur in Servicestellung mit einem alternativen Dichtsystem,
Fig. 4b eine Detailansicht des alternativen Dichtsystems aus Fig. 4a,
Fig. 4c einen Querschnitt durch die Wechselarmatur in Servicestellung mit einem alternativen Dichtsystem in einer Ausgestaltung,
Fig. 5 einen Querschnitt durch die Wechselarmatur mit zusätzlicher Spülkammer, und
Fig. 6 einen Querschnitt durch die Wechselarmatur mit zusätzlicher Spülkammer in einer Ausgestaltung.

In den Figuren sind gleiche Merkmale mit gleichen Bezugszeichen gekennzeichnet.

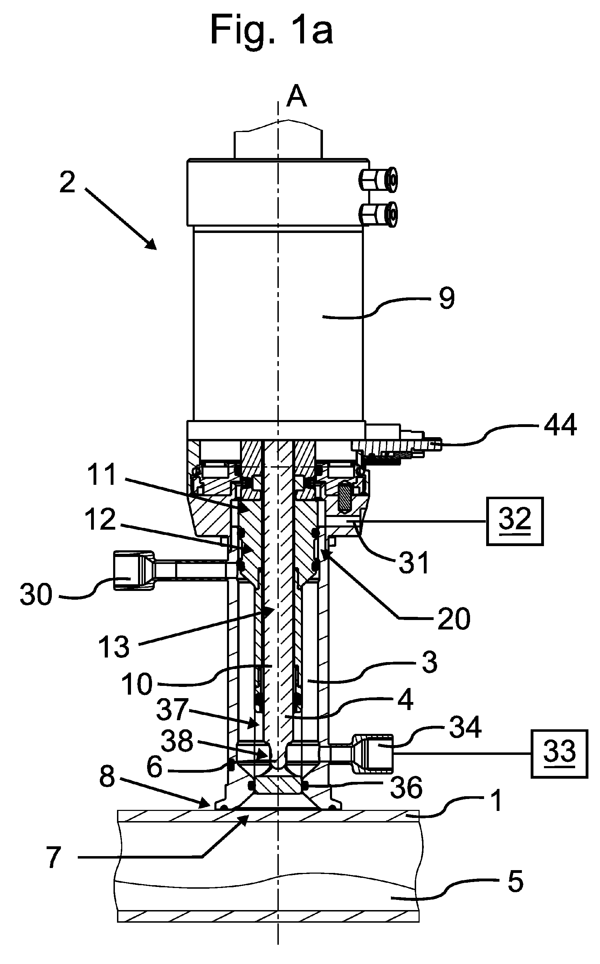

Fig. 1a zeigt ein Gehäuse 2, das mittels komplementärer Anschlussmittel 8 über einen Mediumsanschluss 7 mit einem Behältnis 1 verbunden ist. Dies kann beispielsweise durch eine Flanschverbindung o.ä. geschehen. Im Behältnis 1 befindet sich ein Medium 5. Ein Behältnis 1 ist im Sinne dieser Erfindung als Behälter, Gefäß, Rohrleitung etc. zu verstehen. Das Gehäuse 2 hat üblicherweise zylinderförmige Gestalt und besteht beispielsweise aus Edelstahl oder einem beständigen Kunststoff wie Polyetheretherketon (PEEK).

Innerhalb des Gehäuses 2 ist ein Tauchrohr 10 geführt, welches axial in Richtung des Behältnisses 1 bzw. in vom Behältnis 1 abgewandter Richtung, entlang der zentralen Achse A verschieblich gelagert ist. Die zentrale Achse A fällt mit der Zylindersymmetrieachse des Gehäuses 2, Zylindersymmetrieachse des Mediumsanschlusses 7, der Zylindersymmetrieachse des Tauchrohrs 10, der Zylindersymmetrieachse der Sonde 4 und der Zylindersymmetrieachse der Behandlungskammer 3 zusammen.

Die Verschiebung des Tauchrohrs 10 wird durch einen manuellen oder automatischen, beispielsweise pneumatischen oder elektrischen, Antrieb 9 bewirkt. Ein automatischer Antrieb wird hier nicht im Einzelnen beschrieben, dessen Funktionsweise ist aber beispielsweise aus der DE 10 2005 051 279 B4 bekannt.

Das Tauchrohr 10 ist in drei Bereiche geteilt: einen oberen Bereich 11, einen mittleren Bereich 12 an dem ein Dichtsystem 20 vorgesehen ist und einen unteren Bereich 13. Die einzelnen Bereich des Tauchrohrs 11, 12, 13 können insbesondere aus unterschiedlichen Materialen hergestellt sein und durch Verschweißen, Verschrauben etc. miteinander verbunden werden. Beispielsweise kann der untere, prozessberührende Bereich aus einem sehr widerstandsfähigen Material wie PEEK oder einer geeigneten Legierung gefertigt sein.

Das Dichtsystem 20 ist in drei Abschnitte geteilt, und zwar einen oberen Abschnitt 21, einem mittleren Abschnitt 22 und einen unteren Abschnitt 23. Der mittlere Abschnitt 22 hat eine Länge L. In einer ersten Ausführungsform ist dem oberen Abschnitt 21 eine erste Dichtung 24 und dem unteren Abschnitt 23 eine zweite Dichtung 25 zugeordnet. Die Dichtungen 24, 25 sind auf der Außenseite des Tauchrohrs 10 angeordnet und sind beispielsweise als O-Ringe ausgestaltet.

Eine Sonde 4 ist durch eine, nicht näher beschriebene Aufnahme mit dem Tauchrohr 10, beispielsweise durch Verschraubung, verbunden. Im Innern des Gehäuses 2 befindet sich koaxial zum Tauchrohr 10 die Behandlungskammer 3. Durch eine Dichtung 36 ist die Sonde 4 in der Behandlungskammer 3 gegenüber dem Medium 5 abgedichtet.

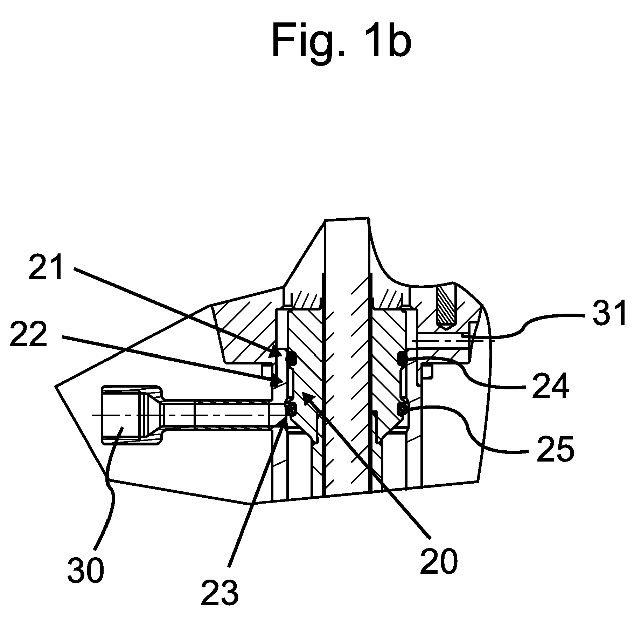

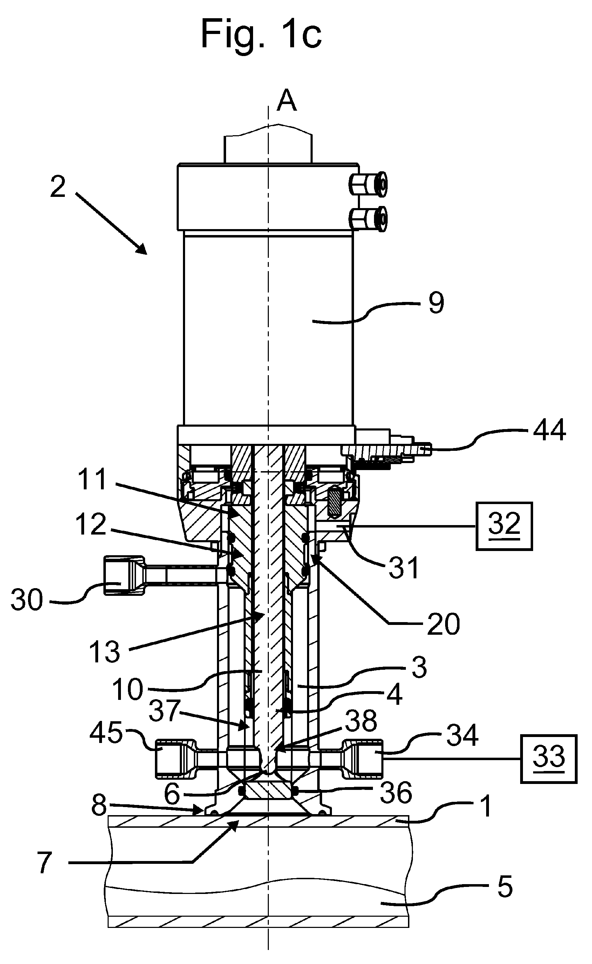

In der in den Figuren Fig. 1-Fig. 6 gezeigten Ausführungsform ist die Sonde als Sensor ausgestaltet, mit welchem physikalische und/oder chemische Prozessgrößen des Mediums 5 bestimmt werden können. Dazu befindet sich an dem Medium 5 zugewandten Ende der Sonde 4 ein Sondenkopf 6.

An seinem unteren Ende bildet das Tauchrohr 10 einen den Sondenkopf 6 umgebenden Schutzzylinder 37, der beabstandet vom mediumsseitigen Ende einen durchbrochenen Bereich mit Öffnungen 38 aufweist. Die Sonde 4 ist derart in dem Tauchrohr 10 gehalten, dass der Sondenkopf 6 innerhalb des Schutzzylinders 37 angeordnet ist, und dass das Medium 5, in das der Schutzzylinder 37 eintaucht, durch die Öffnungen 38 in Kontakt mit dem Sondenkopf 6 kommt.

Der Sondenkopf 6 umfasst einen nicht näher beschriebenen Messwandler, der ein mit der zu bestimmenden Prozessgröße korreliertes Signal erzeugt, das an den Sondenkopf 6 weitergeleitet und in diesem gegebenenfalls durch eine dort untergebrachte, ebenfalls nicht weiter erläuterte, Messelektronik gewandelt und vom Sondenkopf 6 an eine übergeordnete Einheit, beispielsweise ein Messumformer, übertragen wird. Die übergeordnete Einheit ist z.B. mittels einer galvanisch entkoppelten Schnittstelle (induktiv, kapazitiv oder optisch) mit dem Sondenkopf 6 durch einen nicht näher beschriebenen Adapter, z.B. eine Steckverbindung, verbunden. Auch sind Ausführungsformen mit einem Sensor mit Festkabel denkbar.

Prozessgrößen, die mit der Sonde 4 erfasst werden können sind beispielsweise pH-Wert, auch über ISFET, Redoxpotential, Absorption von elektromagnetischen Wellen im Medium 5, beispielsweise mit Wellenlängen im UV-, IR-, und/oder sichtbaren Bereich, Sauerstoff, Leitfähigkeit, Trübung, Konzentration von metallischen und/oder nicht-metallischen Werkstoffen oder Temperatur.

In einer alternativen nicht näher beschriebenen Ausführungsform ist denkbar, dass die Sonde 4 als Probenehmer ausgestaltet ist. Dies soll nicht im Detail erläutert werden. Prinzipiell entnimmt der Probenehmer mittels einer entsprechenden Vorrichtung am Sondenkopf 6, z.B. einem Entnahmeelement, Medium 5 aus dem Behältnis 1 indem das Tauchrohr 10 mit dem Probenehmer durch den Antrieb 9 ein- und ausgefahren wird. Das entnommene Medium 5 kann dann untersucht, weitergeleitet und/oder in andere Behältnisse abgefüllt werden.

In einer Variation fügt der Probenehmer ein oder mehrere Medien mittels einer entsprechenden Vorrichtung am Sondenkopf 6, z.B. einem Zugebeelement, in das Behältnis 1 indem das Tauchrohr 10 mit dem Probenehmer durch einen Antrieb 9 ein- und ausgefahren wird. Das zugegebene Medium kann mit dem sich im Behältnis 1 befindenden Medium 5 eine, evtl. chemische, Reaktion eingehen, sich vermischen, etwas lösen, emulgieren etc.

Am Gehäuse 2 befindet sich ein erster Anschluss 30 zur Behandlungskammer 3 mit einem Innendurchmesser kleiner oder gleich der Länge L. Durch den Anschluss 30 kann Spülmedium in die Behandlungskammer 3 zur Spülung, Reinigung, Kalibration, Sterilisation und/oder zum Ausblasen, Leerdrücken, Absaugen etc. strömen. Es sind Normaldruck, Überdruck sowie auch Unterdruckfahrweisen des Spülmediums denkbar. Das einströmende Spülmedium kann beispielsweise Heißdampf mit einer Temperatur von mehr als 80°C, insbesondere von mehr als 100°C, beispielsweise von 120°C, sein. Es kann unter Druck eingeleitet werden. Zur Durchführung einer Sterilisierung wird das heiße Spülmedium für einen vorgegebenen Zeitraum, der zwischen 20 und 30 Minuten liegen kann, in die Behandlungskammer 3 eingeleitet.

Über einen zweiten Anschluss 34 kann das Spülmedium aus der Behandlungskammer 3 abfließen. Dem zweiten Anschluss 34 zugeordnet ist eine Detektionseinheit 33, beispielsweise ein Druck- oder Flüssigkeitssensor. Erster und zweiter Anschluss 30, 34 können radial auf verschiedenen Seiten positioniert sein, Ausführungsformen bei denen sich die Anschlüsse 30, 34 radial auf der gleichen Seite befinden sind aber denkbar. Der Anschluss 30 ist axial oberhalb des Anschlusses 34 positioniert.

Des Weiteren befindet sich eine Leckagebohrung 31 am Gehäuse 2. Der Leckagebohrung 31 zugeordnet ist eine Detektionseinheit 32, beispielsweise ein Druck- oder Flüssigkeitssensor. Die Leckagebohrung 31 kann wahlweise mit sterilen/sauberen Gefäßen verbunden werden.

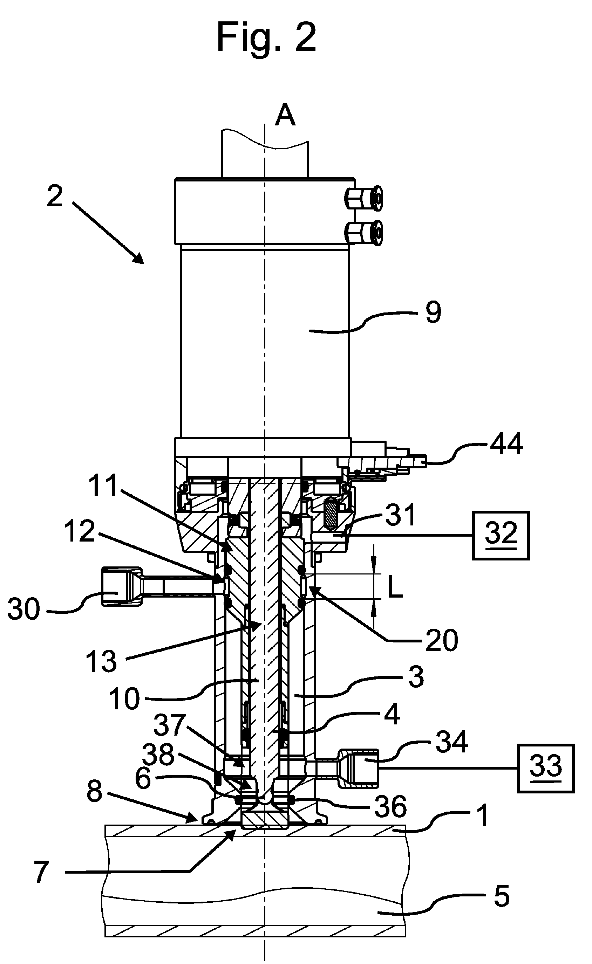

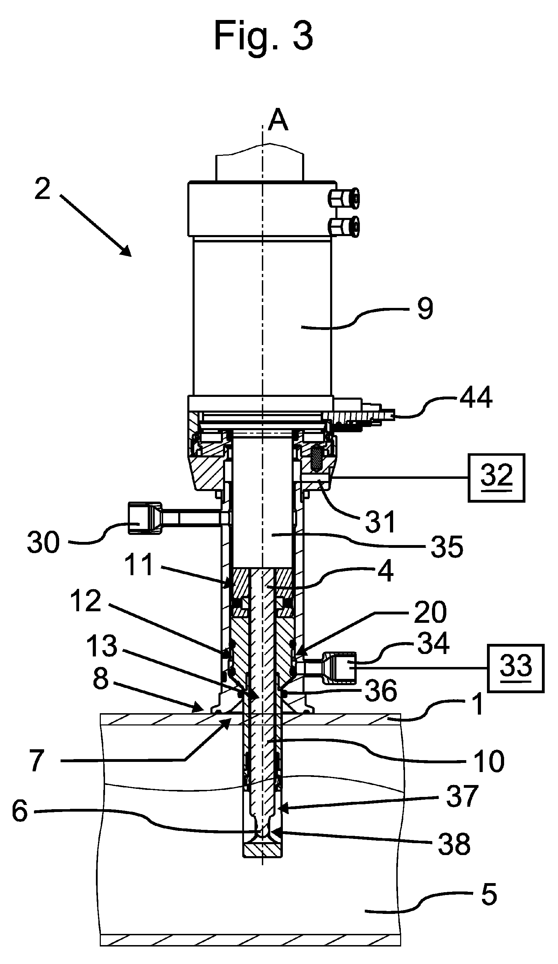

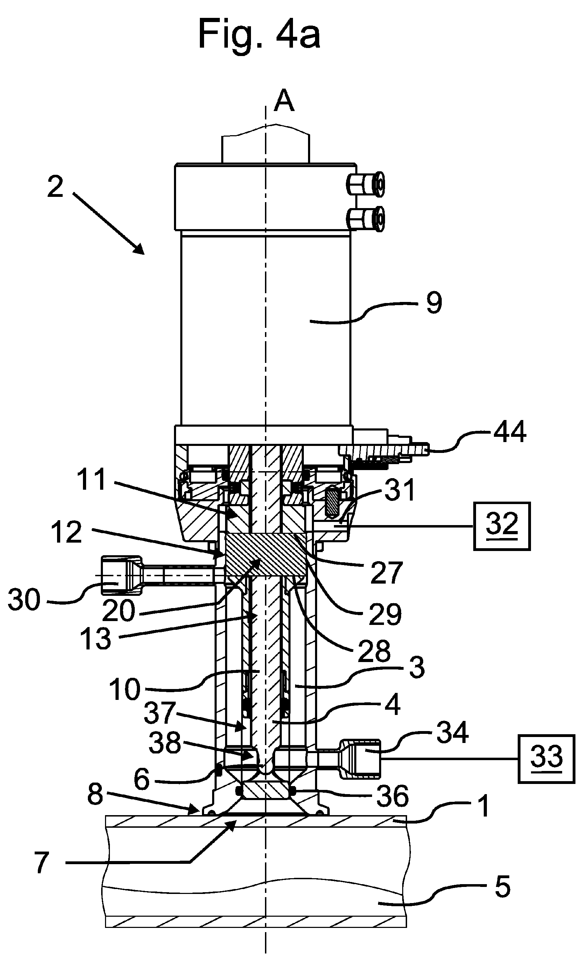

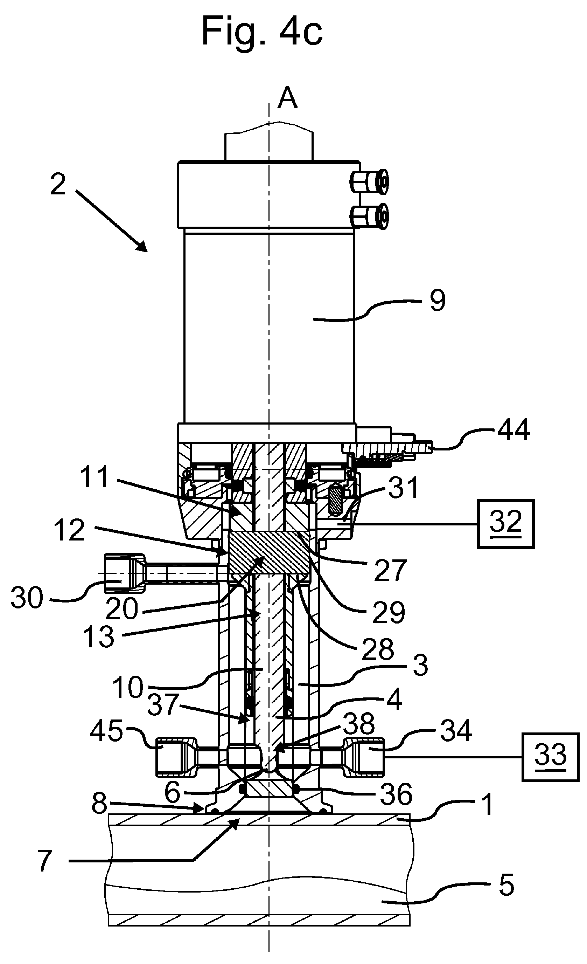

Die vorliegende Erfindung unterscheidet mehrere Stellungen des Tauchrohrs 10: einer eingefahrenen Servicestellung abgebildet in Fig. 1a und Fig. 4a, einer Zwischenstellung abgebildet in Fig. 2 und einer ausgefahrenen Prozessstellung abgebildet in Fig. 3. Bei der ausgefahrenen Prozessstellung befindet sich das Tauchrohr 10 teilweise im Behältnis 1. Bei der eingefahrenen Servicestellung befindet sich das Tauchrohr 10 im Innern des Gehäuses 2. Der Anschluss 30 ist am Gehäuse 2 so positioniert, dass sich das Dichtsystem 20 in Servicestellung auf gleicher axialer Position befindet. Bei der Zwischenstellung befindet sich das Tauchrohr 10 in einer Position zwischen komplett eingefahren und komplett ausgefahren.

Wird in der Servicestellung (Fig. 1a) Spülmedium durch den Anschluss 30 in die Behandlungskammer 3 gegeben, wird der untere Bereich 13 des Tauchrohrs 10 von dem Spülmedium umspült und entsprechend gereinigt und/oder sterilisiert. In der in Fig. 1a und vergrößert in Fig. 1b dargestellten Ausführungsform wird auch die untere Dichtung 25 umspült und entsprechend gereinigt und/oder sterilisiert. Des Weiteren wird in dieser Stellung des Tauchrohrs 10 die Behandlungskammer 3 sowie alle sich in der Behandlungskammer 3 befindenden Bereiche der Sonde 4, insbesondere der Sondenkopf 6, gereinigt und/oder sterilisiert. Einströmendes Spülmedium kann durch den Anschluss 34 wieder aus der Behandlungskammer 3 abfließen. Typischerweise wird die Wechselarmatur so eingebaut, dass die Mittelachse der Wechselarmatur eine Schräglage von 15° bis 75° zur Waagerechten hat. Die Wandungen im Behältnis 1 im zum Prozess zugewandten Bereich der Behandlungskammer 3 sind so ausgestaltet, dass ein Abfluss von Spülmedium durch den Anschluss 34 erleichtert bzw. erzwungen wird.

Beim Spülen der Behandlungskammer 3 kann ein zweistufiger Verfahren angewendet werden: zunächst wird durch den zweiten Anschluss 34 gespült um grobe Verunreinigungen zu lösen oder aufzuweichen. Anschließend wird durch den ersten Anschluss 30 gespült.

Die untere Abschnitt 23 bzw. der mittlere Abschnitt 22 des Dichtsystems 20 können so ausgestaltet sein, dass einströmendes Spülmedium auch den mittleren Abschnitt 22 des Dichtsystems 20 spült, reinigt und/oder sterilisiert. Insbesondere wird dabei auch der dem Behältnis 1 zugewandte Bereich der oberen Dichtung 24 umspült.

Weiterhin ist möglich, dass durch den Anschluss 30 einströmendes Kalibriermedium die Sonde 4 kalibriert wird. Während des Kalibriervorganges ist der Anschluss 34 durch eine dem Anschluss 34 zugeordnete Einrichtung, z.B. ein nicht abgebildetes Ventil, abgedichtet und wird nach Beendigung des Vorgans zum Abfließen des Kalibriermediums wieder geöffnet.

In Servicestellung des Tauchrohrs 10 kann ein Defekt des oberen Abschnitts 21 des Dichtsystems 20, insbesondere ein Defekt der oberen Dichtung 24, durch die der Leckagebohrung 31 zugeordnete Detektionseinheit 32 detektiert werden. Ist der obere Abschnitt 21 des Dichtsystems 20, insbesondere die obere Dichtung 24, intakt wird keine Flüssigkeit oder Druckabfall durch die Detektionseinheit 32 gemessen.

Die Figuren Fig. 1c, Fig. 4c und Fig. 6 zeigen die Wechselarmatur mit einem dritten Anschluss 45 am Gehäuse 2 zur Behandlungskammer 3. Der dritte Anschluss 45 ist axial unterhalb des ersten Anschlusses 30 und etwa auf gleicher axialer Höhe wie der zweite Anschluss 34 positioniert. Dritter Anschluss 45, sowie erster und zweiter Anschluss 30, 34 können radial auf verschiedenen Seiten positioniert sein, Ausführungsformen bei denen sich zumindest zwei der Anschlüsse 30, 34, 45 radial auf der gleichen Seite befinden, sind aber denkbar. Vorzugsweise befinden sich erster und dritten Anschluss 30, 45 in der gleichen radialen Ebene; der zweite Anschluss 34 ist dazu gegenüberliegend positioniert wie in den Figuren Fig. 1c, Fig. 4c und Fig. 6 abgebildet. Besonders bei schrägem Einbau bietet sich an den Anschluss 34, 45 als Abfluss zu verwenden, der am tiefsten liegt.

Bei den Ausführungsformen mit dem dritten Anschluss 45 dient der erste Anschluss 30 lediglich als Zufluss, wobei einströmendes Spülmedium zur Spülung, Reinigung und/oder Sterilisation der Behandlungskammer 3 dient.
Auch fließt durch den ersten Anschluss 30 einströmendes Kalibriermedium durch den dritten Anschluss 45 nach der Kalibration wieder ab.

Es ist möglich auch gleichzeitig durch den zweiten Anschluss 34 zu spülen, reinigen und/oder zu sterilisieren. Durch das gleichzeitige Einfließen durch ersten und zweiten Anschluss 30, 34 entstehen Verwirbelungen in der Behandlungskammer 3, die etwaige Verschmutzungen leichter lösen und damit den Reinigungsvorgang effektiver machen.

Durch den zweiten Anschluss 34 wird Kalibriermedium in die Behandlungskammer 3 eingeleitet, das nach der Kalibrierung durch den dritten Anschluss 45 wieder abfließt. So wird weniger Kalibriermedium gebraucht, da die Behandlungskammer 3 nicht vollständig gefüllt werden muss. Auch kann Kalibriermedium gleichzeitig durch den ersten und zweiten Anschluss 30, 34 in die Behandlungskammer 3 eingeleitet werden.

Der Antrieb bewegt das Tauchrohr 10 von Servicestellung in Zwischenstellung, siehe Fig. 2. Das Taurohr wird in Zwischenstellung beispielsweise durch ein Rastelement (Rastbolzen), einen selbsthemmenden Antrieb oder eine entsprechende Automatik (am Antrieb) arretiert.

In Zwischenstellung in Fig. 2 befindet sich die obere Dichtung 24 oberhalb des Anschlusses 30 und die untere Dichtung 25 unterhalb des Anschlusses 30. Dadurch ist eine Dichtung zum unteren Bereich 13 des Tauchrohrs 10, und damit zur Behandlungskammer 3, sowie zum oberen Bereich 11 des Tauchrohrs 10 gewährleistet. Wird nun Spülmedium durch den Anschluss 30 eingeleitet, wird der mittlere Abschnitt 22 des Dichtsystems 20 gereinigt und sterilisiert. Ein Defekt des unteren Abschnitts 23 des Dichtsystems 20, insbesondere ein Defekt der unteren Dichtung 25, kann nun durch die dem zweiten Anschluss 34 zugeordnete Detektionseinheit 33 detektiert werden. Ist der untere Abschnitt 23 des Dichtsystems 20, insbesondere die untere Dichtung 25, intakt wird keine Flüssigkeit oder Druckabfall durch die Detektionseinheit 33 gemessen. Dabei ist der Mediumsanschluss 7 abgedichtet. Durch den bereits angesprochenen einen schrägen Einbau kann ein Abfluss des Spülmediums durch den Anschluss 34 erzwungen werden. Im Behältnis 1 zugewandten Bereich der Behandlungskammer 3 sind die Wandungen so ausgestaltet, dass das Spülmedium entsprechend fließt.

In Zwischenstellung ist auch folgendes Szenario möglich: durch den Anschluss 34 einströmendes Spülmedium spült, reinigt und/oder sterilisiert die Behandlungskammer 3. Das Dichtsystem 20, insbesondere die Dichtung 28 dichtet zum Anschluss 30 und das Spülmedium fließt über den Mediumsanschluss 7 ab. Zusätzlich kann der Anschluss 30 über ein nicht dargestelltes Ventil verschlossen sein. Somit kann die Dichtung 36 gespült, gereinigt und/oder sterilisiert werden. Üblicherweise ist dabei der Prozess unterbrochen.

Wird das Tauchrohr 10 durch den Antrieb 9 weiter nach unten, d.h. in Richtung Behältnis 1, bewegt, entweicht das sich in der Behandlungskammer 3 befindende Medium, beispielsweise Spülflüssigkeit oder Luft, durch den Anschluss 34. Durch die Bewegung des Tauchrohrs 10 nach unten wird die Behandlungskammer 3 im Volumen kleiner. Bei der gegenläufigen Bewegung des Tauchrohrs nach oben, von Prozessstellung in Servicestellung über die Zwischenstellung wird das Volumen der Behandlungskammer wieder größer. Medium, insbesondere Luft, das sich während der Prozessstellung im Druckraum 35 befunden hat, kann durch die Leckagebohrung 31 entweichen.

In Prozessstellung in Fig. 3 befindet sich das Dichtsystem 20 auf Höhe des Anschlusses 34, oberhalb der Dichtung 36. Durch den Anschluss 34 kann somit der untere Abschnitt 23 des Dichtsystems 20, insbesondere die untere Dichtung 25, gereinigt und sterilisiert werden.

Es ist somit in jeder Stellung des Tauchrohrs 10 gewährleistet, dass keine Verunreinigungen von Antrieb 9 zum Behältnis 1 gelangen können.

Mit geringem technischen Aufwand ist denkbar, dass auch der Druckraum 35 durch Spülmedium durch den Anschluss 30 gespült, gereinigt und sterilisiert wird.

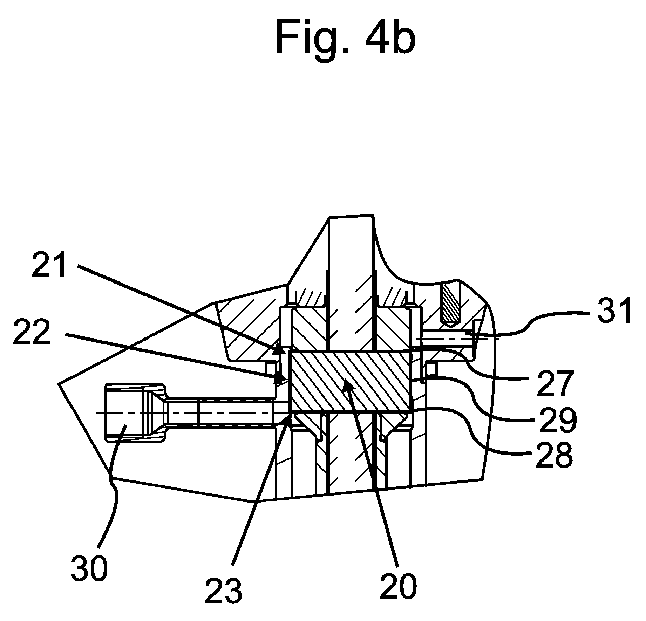

Fig. 4a zeigt eine alternative Ausgestaltung des Dichtsystems 20. In dieser Ausgestaltung besteht das Dichtsystem 20 aus nur einer Dichtung 26 mit mindestens der Länge L. Die Dichtung 26 hat eine obere und untere Kante 27, 28. Fig. 4b zeigt eine vergrößerte Ansicht des alternativen Dichtsystems 20. Die Dichtung 26 ist auf der Außenseite des Tauchrohrs 10 angeordnet.

Grundsätzlich funktioniert das alternative Dichtsystem aus Fig. 4a/b gleich wie das Dichtsystem aus Fig. 1 a/b, nur dass nunmehr eine Dichtung der Länge L verwendet wird statt zwei Dichtungen im Abstand L.

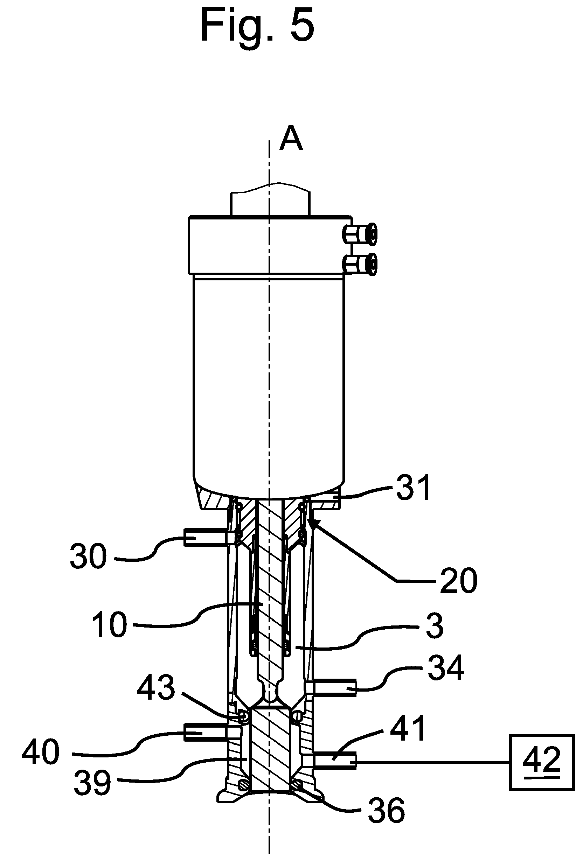

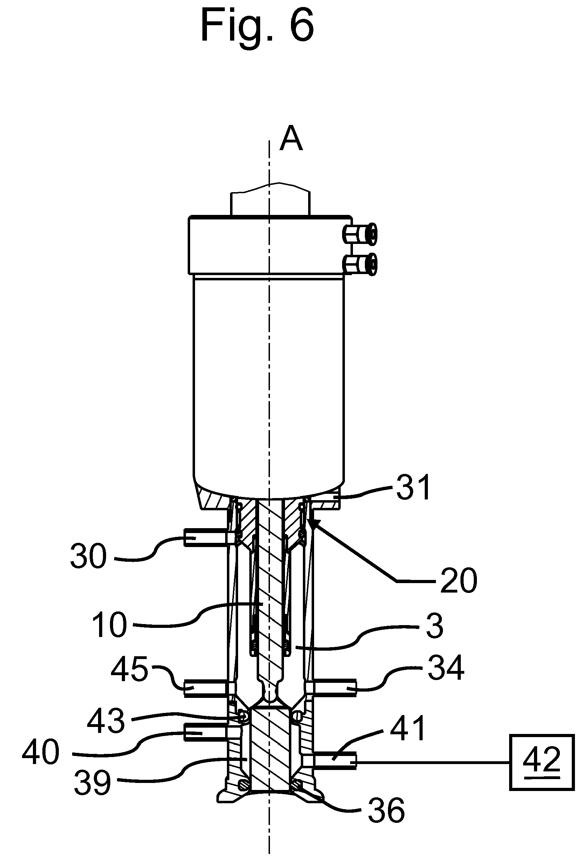

Fig. 5 zeigt die erfindungsgemäße Wechselarmatur mit einer Spülkammer 39, die sich unterhalb der Behandlungskammer 3 befindet. Darüber hinaus weist die Wechselarmatur die gleichen Merkmale wie oben beschrieben aus. Auch kann das Dichtsystem 20 aus zwei Dichtungen bestehen wie in Fig. 1 a/b beschrieben und in Fig. 5 abgebildet, aus einer einzigen Dichtung bestehen wie in Fig. 4a/b beschrieben, oder einen dritten Anschluss 45 besitzen wie in Fig. 6 gezeigt.

Spülkammer 39 und Behandlungskammer 3 sind durch eine Dichtung 43 gegeneinander abgedichtet. Prozessseitig ist die Spülkammer 39 durch eine Dichtung 36 abgedichtet. Die Spülkammer 39 hat zwei Anschlüsse 40, 41, wobei dem Anschluss 41 eine Detektionseinheit 42 zugeordnet ist.

Durch den Anschluss 40 wird kontinuierlich Spülmedium in die Spülkammer 39 gespült. Das Spülmedium hat bekannte und wohl definierte Eigenschaften, z.B. pH- Wert oder Leitfähigkeit. Tritt nun eine Leckage an einer der Dichtungen 36, 43 auf, leckt Medium 5 aus dem Behältnis 1 oder der Behandlungskammer 3 in die Spülkammer 39. Durch die Vermischung ändert sich das Spülmedium und die dem Anschluss 41 zugeordnete Detektionseinheit 42 kann diese Veränderung einer Eigenschaft des Spülmediums detektieren.

Es ist weiterhin denkbar, dass das Spülmedium, das durch den Anschluss 40 in die Spülkammer 39 geleitet wird kühlende oder erhitzende Eigenschaften hat. Da ein Sterilisationsvorgang der Behandlungskammer 3 und/oder der Sonde 4 üblicherweise mit Heißdampf vorgenommen wird, befinden sich die Behandlungskammer 3 und die Sonde 4 nach einem solchen Vorgang auf einem erhöhten Temperaturniveau. Wird nun kühlendes Medium durch die sich unter der Behandlungskammer 3 befindende Spülkammer 39 geleitet, so wird diese abgekühlt. Dies kann insbesondere dann vorteilhaft sein, wenn die Sonde 4 nicht mit erhöhter Temperatur wieder in das Behältnis 1 gefahren werden darf um beispielsweise die Prozesssicherheit nicht zu gefährden. Durch den beschriebenen Vorgang wird die Standzeit der Sonde 4 verringert und somit Kosten gespart.

Weiterhin wird durch die Kühlung der Spülkammer 39 mittels eines Spülmediums verhindert, dass während einer Spülung, Reinigung oder Sterilisation der Behandlungskammer 3 und/oder Sonde 4, die üblicherweise mit erhöhter Temperatur durchgeführt werden, das sich im Behältnis 1 befindende Medium 5 ebenfalls erhitzt wird (beispielsweise durch Wärmeübertragung) und somit gegebenenfalls zerstört oder funktional beeinträchtigt wird (d.h. Farbe, Aktivität, Ausbeute etc.).

**Bezugszeichenliste**

| | | | |
|---|---|---|---|
| 1 | Behältnis | | |
| 2 | Gehäuse | 36 | Dichtung |
| 3 | Behandlungskammer | 37 | Schutzzylinder |
| 4 | Sonde | 38 | Öffnungen von 37 |
| 5 | Medium | 39 | Spülkammer |
| 6 | Sondenkopf | 40 | Anschluss |
| 7 | Mediumsanschluss | 41 | Anschluss |
| 8 | Komplementäre Anschlussmittel | 42 | Detektionseinheit |
| 9 | Antrieb | 43 | Dichtung |
| 10 | Tauchrohr | 44 | Rastelement |
| 11 | Oberer Bereich von 10 | 45 | Anschluss |
| 12 | Mittlerer Bereich von 10 | A | Zentrale Achse |
| 13 | Unterer Bereich von 10 | | |
| 20 | Dichtsystem | | |
| 21 | Oberer Abschnitt von 20 | | |
| 22 | Mittlerer Abschnitt von 20 | | |
| 23 | Unterer Abschnitt von 20 | | |
| 24 | Obere Dichtung | | |
| 25 | Untere Dichtung | | |
| 26 | Dichtung | | |
| 27 | Obere Kante von 26 | | |
| 28 | Untere Kante von 26 | | |
| 29 | Bereich zwischen 27/28 | | |
| 30 | Anschluss | | |
| 31 | Leckagebohrung | | |
| 32 | Detektionseinheit | | |
| 33 | Detektionseinheit | | |
| 34 | Anschluss | | |
| 35 | Druckraum | | |

## Patentansprüche

1. Wechselarmatur, umfassend
ein Gehäuse (2),
einen Mediumsanschluss (7), der an dem Gehäuse (2) angeordnet ist und die Wechselarmatur mit einem mit Medium (5) gefüllten Behältnis (1) verbindbar macht, ein Tauchrohr (10), das durch einen Antrieb (9) axial zwischen drei Stellungen verfahrbar ist, und zwar
einer aus dem Gehäuse (2) ausgefahrenen Prozessstellung,
zumindest einer Zwischenstellung, und
einer in das Gehäuse (2) eingefahrenen Servicestellung,
eine Sonde (4), die im Tauchrohr (10) vorgesehen ist,
wobei die Sonde (4) an ihrem dem Medium (5) zugewandten Ende einen Sondenkopf (6) aufweist,
wobei in der Servicestellung der Sondenkopf (6) innerhalb einer im Gehäuse (2) gebildeten Behandlungskammer (3) angeordnet ist,
wobei das Tauchrohr (10) in drei Bereiche geteilt ist, und zwar einen oberen, dem Behältnis abgewandten, Bereich (11),
einen mittleren Bereich (12) an dem ein Dichtsystem (20) vorgesehen ist, und einen unteren, dem Behältnis zugewandten, Bereich (13),
wobei das Dichtsystem (20) so ausgestaltet ist, dass in keiner Stellung des Tauchrohres (10) ein Austausch von Medium (5) oder Verunreinigungen von Antrieb (9) zu Behandlungskammer (3) und umgekehrt statt findet,
**dadurch gekennzeichnet, dass**
ein Rastelement (44), ein selbsthemmender Antrieb oder eine Automatik vorgesehen ist, das das Tauchrohr (10) in Zwischenstellung arretiert.

2. Wechselarmatur nach Anspruch 1,
wobei das Dichtsystem (20) in drei Abschnitte geteilt ist, und zwar einen oberen Abschnitt (21),
einem mittleren Abschnitt (22) und
einen unteren Abschnitt (23).

3. Wechselarmatur nach Anspruch 2,
wobei das Dichtsystem (20) aus zwei Dichtungen besteht,
wobei am oberen Abschnitt (21) des Dichtsystems (20) die erste Dichtung (24) vorgesehen ist,
wobei am unteren Abschnitt (23) des Dichtsystems (20) die zweite Dichtung (25) vorgesehen ist,
und der mittlere Abschnitt (22) des Dichtsystems (20) die Länge L hat.

4. Wechselarmatur nach Anspruch 2,
wobei das Dichtsystem (20) aus einer Dichtung (26) mindestens der Länge L besteht,
wobei die obere Kante (27) der Dichtung (26) dem oberen Abschnitt (21) des Dichtsystems (20) zugeordnet ist,
wobei die untere Kante (28) der Dichtung (26) dem unteren Abschnitt (23) des Dichtsystems (20) zugeordnet ist,
und wobei der Bereich (29) zwischen der oberen und der unteren Kante (27, 28) der Dichtung (26) dem mittleren Abschnitt (22) des Dichtsystems (20) zugeordnet ist.

5. Wechselarmatur nach zumindest einem der Ansprüche 2 bis 4,
wobei ein erster Anschluss (30) am Gehäuse (2) zur Behandlungskammer (3) vorgesehen ist, der derart angeordnet ist, dass durch den ersten Anschluss (30) einströmendes Spülmedium den unteren Abschnitt (23) des Dichtsystems (20) spült, reinigt und/oder sterilisiert, wenn sich das Tauchrohr (10) in Servicestellung befindet.

6. Wechselarmatur nach Anspruch 5,
wobei der erste Anschluss (30) so ausgestaltet ist, dass sein Innendurchmesser kleiner oder gleich der Länge L ist.

7. Wechselarmatur nach Anspruch 5 oder 6,
wobei der erste Anschluss (30) so angeordnet ist, dass durch den ersten Anschluss (30) einströmendes Spülmedium den mittleren Abschnitt (22) des Dichtsystems (20) spült, reinigt und/oder sterilisiert, wenn sich das Tauchrohr (10) in Zwischenstellung befindet.

8. Wechselarmatur nach zumindest einem der Ansprüche 5 bis 7,
wobei eine Leckagebohrung (31) durch das Gehäuse (2) vorgesehen ist,
wobei eine Detektionseinheit (32) der Leckagebohrung (31) zugeordnet ist, wobei die Leckagebohrung (31) so angeordnet ist, dass die Detektionseinheit (32) einen Defekt des oberen Abschnitts (21) des Dichtsystems (20) detektiert, wenn sich das Tauchrohr (10) in Servicestellung befindet und Spülmedium durch den ersten Anschluss (30) strömt oder der erste Anschluss (30) mit Druck beaufschlagt wird.

9. Wechselarmatur nach zumindest einem der Ansprüche 5 bis 8,
wobei ein zweiter Anschluss (34) am Gehäuse (2) zur Behandlungskammer (3) vorgesehen ist, der derart angeordnet ist, dass das bei axialer Bewegung des Tauchrohres (10) von Servicestellung in Prozessstellung verdrängtes Medium durch den zweiten Anschluss (34) entweicht.

10. Wechselarmatur nach Anspruch 9,
wobei eine Detektionseinheit (33) dem zweiten Anschluss (34) zugeordnet ist, die einen Defekt des unteren Abschnitts (23) des Dichtsystems (20) detektiert, wenn sich das Tauchrohr (10) in Zwischenstellung befindet und Spülmedium durch den ersten Anschluss (30) strömt oder der erste Anschluss (30) mit Druck beaufschlagt wird.

11. Wechselarmatur nach zumindest einem der vorherigen Ansprüche,
wobei eine Spülkammer (39) vorgesehen ist, die im Gehäuse (2) unterhalb der Behandlungskammer (3), d.h. dem Medium (5) zugewandt, angeordnet ist.

12. Wechselarmatur nach Anspruch 11,
wobei mindestens ein Anschluss (40) am Gehäuse (2) zur Spülkammer (39) vorgesehen ist, der so ausgestaltet ist, dass durch den Anschluss (40) strömendes Spülmedium die Spülkammer (39) spült, reinigt und/oder sterilisiert.

13. Wechselarmatur nach zumindest einem der Ansprüche 5 bis 10,
wobei ein dritter Anschluss (45) am Gehäuse (2) zur Behandlungskammer (3) vorgesehen ist, der derart angeordnet ist, dass durch den ersten Anschluss (30) einströmendes Spülmedium zur Spülung, Reinigung und/oder Sterilisation der Behandlungskammer (3) und/oder durch den ersten Anschluss (30) einströmendes Kalibriermedium zur Kalibrierung der Sonde (4), durch den dritten Anschluss (45) abließt.

14. Wechselarmatur nach Anspruch 9 oder 10,
wobei ein dritter Anschluss (45) am Gehäuse (2) zur Behandlungskammer (3) vorgesehen ist, der derart angeordnet ist, dass durch den ersten Anschluss (30) einströmendes Spülmedium zur Spülung, Reinigung und/oder Sterilisation der Behandlungskammer (3) und/oder durch den ersten Anschluss (30) einströmendes Kalibriermedium zur Kalibrierung der Sonde (4), durch den dritten Anschluss (45) abließt,
wobei der zweite Anschluss (34) so ausgestaltet ist, dass durch den zweiten Anschluss (34) einfließendes Spülmedium die Behandlungskammer (3) spült, reinigt und/oder sterilisiert und/oder einfließendes Kalibriermedium die Sonde (4) kalibriert.

## Claims

1. Retractable assembly, comprising
a housing (2),
a medium connection (7), which is arranged on the housing (2) and which permits the connection between the retractable assembly and a vessel (1) filled with medium (5),
an immersion tube (10), which can be moved axially by a drive (9) between three positions, specifically
a process position leaving the housing (2),
at least one intermediate position, and
a service position entering into the housing (2),
a probe (4), which is provided in the immersion tube (10),
wherein the probe (4) has a probe head (6) at its end facing towards the medium (5)
wherein, in the service position, the probe head (6) is arranged in a treatment chamber (3) which is formed in the housing (2),
wherein the immersion tube (10) is divided into three sections, specifically a top section (11) facing away from the vessel,
a middle section (12) in which a sealing system (20) is provided, and
a bottom section (13) facing towards the vessel,
wherein the sealing system (20) is designed in such a way that an exchange of medium (5) or contamination from the drive (9) to the treatment chamber (3) and vice versa does not take place in any position of the immersion tube (10),
**characterized in that**
a locking element (4), a self-locking drive or an automatic system is provided that locks the immersion tube (10) in the intermediate position.

2. Retractable assembly as claimed in Claim 1,
wherein the sealing system (20) is divided into three sections, specifically
a top section (21),
a middle section (22) and
a bottom section (23).

3. Retractable assembly as claimed in Claim 2,
wherein the sealing system (20) consists of two seals,
wherein the first seal (24) is provided on the top section (21) of the sealing system (20),
wherein the second seal (25) is provided on the bottom section (23) of the sealing system (20),
and the middle section (22) of the sealing system (20) has the length L.

4. Retractable assembly as claimed in Claim 2,
wherein the sealing system (20) consists of a seal (26) with a minimum length L,
wherein the upper edge (27) of the seal (26) is assigned to the top section (21) of the sealing system (20),
wherein the lower edge (28) of the seal (26) is assigned to the bottom section (23) of the sealing system (20),
and wherein the area (29) between the upper and lower edge (27, 28) of the seal (26) is assigned to the middle section (22) of the sealing system (20).

5. Retractable assembly as claimed in at least one of the claims 2 to 4,
wherein on the housing (2) a first connection (30) is provided to the treatment chamber (3), said connection being arranged in such a way that rinse medium flowing in through the first connection (30) rinses, cleans and/or sterilizes the bottom section (23) of the sealing system (20) if the immersion tube (10) is in the service position.

6. Retractable assembly as claimed in Claim 5,
wherein the first connection (30) is designed in such a way that its internal diameter is smaller or equal to the length L.

7. Retractable assembly as claimed in Claim 5 or 6,
wherein the first connection (30) is arranged in such a way that rinse medium flowing in through the first connection (30) rinses, cleans and/or sterilizes the middle section (23) of the sealing system (20) if the immersion tube (10) is in the intermediate position.

8. Retractable assembly as claimed in at least one of the Claims 5 to 7,
wherein a leakage hole (31) is provided through the housing (2),
wherein a detection unit (32) is assigned to the leakage hole (31),
wherein the leakage hole (31) is arranged in such a way that that the detection unit (32) detects a defect of the top section (21) of the sealing system (20) when the immersion tube (10) is in the service position and rinse medium flows through the first connection (30) or pressure is applied to the first connection (30).

9. Retractable assembly as claimed in at least one of the Claims 5 to 8,
wherein on the housing (2) a second connection (34) is provided to the treatment chamber (3), said connection being arranged in such a way that the medium displaced as a result of the axial movement of the immersion tube (10) from the service position to the process position escapes through the second connection (34).

10. Retractable assembly as claimed in Claim 9,
wherein a detection unit (33) is assigned to the second connection (34), said detection unit detecting a defect in the bottom section (23) of the sealing system (20) when the immersion tube (10) is in the intermediate position and rinse medium flows through the first connection (30) or pressure is applied to the first connection (30).

11. Retractable assembly as claimed in at least one of previous claims,
wherein a rinse chamber (39) is provided, which is arranged in the housing (2) beneath the treatment chamber (3), i.e. facing towards the medium (5).

12. Retractable assembly as claimed in Claim 11,
wherein on the housing (2) at least one connection (40) is provided to the rinse chamber (39), said connection being designed in such a way that rinse medium flowing through the connection (40) rinses, cleans and/or sterilizes the rinse chamber (39).

13. Retractable assembly as claimed in at least one of the Claims 5 to 10,
wherein on the housing (2) a third connection (45) is provided to the treatment chamber (3), said connection being arranged in such a way that rinse medium flowing through the first connection (30) and designed to rinse, clean and/or sterilize the treatment chamber (3) and/or calibration medium flowing through the first connection (30) for calibrating the probe (4) drains through the third connection (45).

14. Retractable assembly as claimed in Claim 9 or 10,
wherein on the housing (2) a third connection (45) is provided to the treatment chamber (3), said connection being arranged in such a way that rinse medium flowing through the first connection (30) and designed to rinse, clean and/or sterilize the treatment chamber (3) and/or calibration medium flowing through the first connection (30) for calibrating the probe (4) drains through the third connection (45),
wherein the second connection (34) is designed in such a way that rinse medium flowing in through the second connection (34) rinses, cleans and/or sterilizes the treatment chamber (3) and/or inflowing calibration medium calibrates the probe (4).

## Revendications

1. Sonde rétractable, comprenant
un boîtier (2),
un raccord de produit (7), qui est disposé sur le boîtier (2) et qui permet la liaison entre la sonde rétractable et un réservoir (1) rempli d'un produit (5),
un tube d'immersion (10), qui peut être déplacé au moyen d'un entraînement (9) axialement entre trois positions, à savoir
une position de process sortie du boîtier (2),
au moins une position intermédiaire, et
une position de service rentrée dans le boîtier (2),
une sonde (4), qui est prévue dans le tube d'immersion (10),
pour laquelle la sonde (4) présente en son extrémité orientée vers le produit (5)
une tête de sonde (6)
pour laquelle la tête de sonde (6) est disposée, en position de service, à l'intérieur d'une chambre de traitement (3) formée dans le boîtier (2),
pour laquelle le tube d'immersion (10) est divisé en trois zones, à savoir
une zone supérieure (11) orientée à l'opposé du réservoir,
une zone médiane (12), dans laquelle est prévu un système d'étanchéité (20), et
une zone inférieure (13) orientée vers le réservoir,
le système d'étanchéité (20) étant conçu de telle sorte que dans aucune position du tube d'immersion (10) n'a lieu un échange de produit (5) ou d'impuretés entre l'entraînement (9) et la chambre de traitement (3) et inversement,
**caractérisée**
**en ce qu'**est prévu un élément d'arrêt (4), un entraînement autobloquant ou un automatisme, qui bloque le tube d'immersion (10) en position intermédiaire.

2. Sonde rétractable selon la revendication 1,
pour laquelle le système d'étanchéité (20) est divisé en trois parties, à savoir
une partie supérieure (21),
une partie médiane (22) et
une partie inférieure (23).

3. Sonde rétractable selon la revendication 2,
pour laquelle le système d'étanchéité (20) est constitué de deux joints,
pour laquelle le premier joint (24) est prévu sur la partie supérieure (21) du système d'étanchéité (20),
pour laquelle le deuxième joint (25) est prévu sur la partie inférieure (23) du système d'étanchéité (20),
et la partie médiane (22) du système d'étanchéité (20) présente la longueur L.

4. Sonde rétractable selon la revendication 2,
pour laquelle le système d'étanchéité (20) est constitué d'un joint (26) de longueur minimum L,
pour laquelle le bord supérieur (27) du joint (26) est attribué à la partie supérieure (21) du système d'étanchéité (20),
pour laquelle le bord inférieur (28) du joint (26) est attribué à la partie inférieure (23) du système d'étanchéité (20),
et pour laquelle la partie (29) comprise entre les arêtes supérieure et inférieure (27, 28) du joint (26) est attribuée à la partie médiane (22) du système d'étanchéité (20).

5. Sonde rétractable selon au moins l'une des revendications 2 à 4,
pour laquelle est prévu sur le boîtier (2) un premier raccord (30) vers la chambre de traitement (3), lequel raccord est disposé de telle sorte que le produit de rinçage s'écoulant à travers le premier raccord (30) rince, nettoie et/ou stérilise la partie inférieure (23) du système d'étanchéité (20) lorsque le tube d'immersion (10) est en position de service.

6. Sonde rétractable selon la revendication 5,
pour laquelle le premier raccord (30) est conçu de telle sorte que son diamètre intérieur est inférieur ou égal à la longueur L.

7. Sonde rétractable selon la revendication 5 ou 6,
pour laquelle le premier raccord (30) est disposé de telle sorte que le produit de rinçage s'écoulant à travers le premier raccord (30) rince, nettoie et/ou stérilise la partie médiane (22) du système d'étanchéité (20) lorsque le tube d'immersion (10) est en position intermédiaire.

8. Sonde rétractable selon au moins l'une des revendications 5 à 7,
pour laquelle est prévu à travers le boîtier (2) un alésage de fuite (31),
pour laquelle une unité de détection (32) est attribuée à l'alésage de fuite (31), pour laquelle l'alésage de fuite (31) est disposé de telle sorte que l'unité de détection (32) détecte un défaut de la partie supérieure (21) du système d'étanchéité (20) lorsque le tube d'immersion (10) est en position de service et le produit de rinçage s'écoule à travers le premier raccord (30) ou le premier raccord (30) est alimenté en pression.

9. Sonde rétractable selon au moins l'une des revendications 5 à 8,
pour laquelle est prévu sur le boîtier (2) un deuxième raccord (34) vers la chambre de traitement (3), lequel raccord est disposé de telle sorte qu'en cas de mouvement axial du tube d'immersion (10) de la position de service en position de process, le produit déplacé s'échappe à travers le deuxième raccord (34).

10. Sonde rétractable selon la revendication 9,
pour laquelle est attribuée au deuxième raccord (34) une unité de détection (33), qui détecte un défaut de la partie inférieure (23) du système d'étanchéité (20) lorsque le tube d'immersion (10) est en position intermédiaire et le produit de rinçage s'écoule à travers le premier raccord (30) ou le premier raccord (30) est alimenté en pression.

11. Sonde rétractable selon au moins l'une des revendications précédentes,
pour laquelle est prévue une chambre de rinçage (39), qui est disposée dans le boîtier (2), sous la chambre de traitement (3), c.-à-d. orientée vers le produit (5).

12. Sonde rétractable selon la revendication 11,
pour laquelle est prévu sur le boîtier (2) au minimum un raccord (40) vers la chambre de rinçage (39), lequel raccord est conçu de telle sorte que le produit de rinçage s'écoulant à travers le raccord (40) rince, nettoie et/ou stérilise la chambre de rinçage (39).

13. Sonde rétractable selon au moins l'une des revendications 5 à 10,
pour laquelle est prévu sur le boîtier (2) un troisième raccord (45) vers la chambre de traitement (3), lequel raccord est disposé de telle sorte que le produit de rinçage s'écoulant à travers le premier raccord (30), destiné au rinçage, au nettoyage et/ou à la stérilisation de la chambre de traitement (3), et/ou de telle sorte que le produit d'étalonnage s'écoulant à travers le premier raccord (30), destiné à l'étalonnage de la sonde (4), s'écoulent à travers le troisième raccord (45).

14. Sonde rétractable selon la revendication 9 ou 10,
pour laquelle est prévu sur le boîtier (2) un troisième raccord (45) vers la chambre de traitement (3), lequel raccord est disposé de telle sorte que le produit de rinçage s'écoulant à travers le premier raccord (30), destiné au rinçage, au nettoyage et/ou à la stérilisation de la chambre de traitement (3), et/ou de telle sorte que le produit d'étalonnage s'écoulant à travers le premier raccord (30), destiné à l'étalonnage de la sonde (4), s'écoulent à travers le troisième raccord (45),
pour laquelle le deuxième raccord (34) est conçu de telle sorte que le produit de rinçage s'écoulant à travers le deuxième raccord (34) rince, nettoie et/ou stérilise la chambre de traitement (3) et/ou de telle sorte que le produit d'étalonnage s'écoulant étalonne la sonde (4).
